Europäisches Patentamt

European Patent Office

Office européen des brevets

(11) Veröffentlichungsnummer: **0 481 330 A1**

## (12) EUROPÄISCHE PATENTANMELDUNG

(21) Anmeldenummer: **91117105.6**

(22) Anmeldetag: **08.10.91**

(51) Int. Cl.5: **A47B 91/02**, B29C 67/18, B29D 1/00

(30) Priorität: **10.10.90 DE 4032100**

(43) Veröffentlichungstag der Anmeldung:
**22.04.92 Patentblatt 92/17**

(84) Benannte Vertragsstaaten:
**AT BE CH DE FR IT LI NL**

(71) Anmelder: **VS Vereinigte Spezialmöbelfabriken Verwaltungs-GmbH Hochhäuser Strasse 8 W-6972 Tauberbischofsheim(DE)**

(72) Erfinder: **Schraysshuen, Jürgen Lichtstrasse 10 W-7171 Schwäbisch Gmünd - Bargau(DE)**
Erfinder: **Leiendecker, Arno Lindenweg 9 W-6972 Tauberbischofsheim(DE)**

(74) Vertreter: **Patentanwälte RUFF, BEIER und SCHÖNDORF Neckarstrasse 50 W-7000 Stuttgart 1(DE)**

(54) **Möbel-Versteller.**

(57) Zur Höhenverstellung eines Tischbeines (2) ist in dessen untere Endfläche (5) eine Sacklochbohrung (6) eingebracht, auf deren Boden (9) zunächst ein plastifizierter Kunststoff aufgebracht und dann mit einem Formkern zu einem hülsenförmigen Träger (10) verpreßt wird. Nach dem Entfernen des Formkernes kann in ein Innengewinde des Trägers (10) ein bolzenförmiges Stellglied (11) eingeschraubt werden, dessen unteres Ende die Standfläche (19) des Möbels bildet.

Fig.1

EP 0 481 330 A1

Die Erfindung betrifft einen Möbel-Versteller, der z.B. zur Quer- und/oder Höhenjustierung bzw. zum Verspannen von Möbeleinheiten oder Möbelteilen geeignet ist. Der Versteller weist zweckmäßig mindestens einen an einem Korpusteil des Möbels angeordneten Träger zur verstellbaren und ggf. festsetzbaren Aufnahme wenigstens eines Stellgliedes auf, das an gegenüber dem Träger lagegesicherten Eingriffsflächen geführt ist.

Der Möbel-Versteller kann z.B. als Höhenausgleich an Tischbeinen verwendet werden, damit alle Standflächen der Beine des Tisches spielfrei in Bodenkontakt stehen. In diesem Fall kann das Stellglied selbst eine Stand- bzw. Spannfläche bilden. Bekannte Möbel-Versteller sind verhältnismäßig aufwendig in der Ausbildung sowie der Herstellung, und es ist schwierig, den Träger dauerhaft völlig spielfrei und sicher mit dem Korpusteil zu verbinden.

Der Erfindung liegt die Aufgabe zugrunde, einen Möbel-Versteller zu schaffen, bei welchem Nachteile bekannter Ausbildungen bzw. der beschriebenen Art vermieden sind und der insbesondere bei einfachem Aufbau einen sehr sicheren, spielfreien Halt am Möbel gewährleistet.

Zur Lösung dieser Aufgabe ist mindestens ein Träger zweckmäßig als Gießformteil ausgebildet, der unmittelbar durch Anformen eines fließfähigen bzw. plastischen Werkstoffes an Wandungsflächen einer Öffnung des Möbels hergestellt und nach Erstarren des Werkstoffes dadurch völlig spielfrei und innig verzahnt mit dem Möbel verbunden ist.

Je nachdem, aus welchem Werkstoff die Wandungsflächen der Öffnung des Möbels bestehen, können für den Träger verschiedene metallische oder nichtmetallische, plastifizierbare Werkstoffe verwendet werden, die zweckmäßig in erwärmtem Zustand fließfähig und bei üblicherweise vorkommenden Außentemperaturen, insbesondere bis mindestens 100 bzw. 150°C formstabil erstarrt sind. Der Träger bildet mit dem Korpusteil einen mindestens zweischichtigen Verbundkörper aus unterschiedlichen Werkstoffen, der auch bei verhältnismäßig dünnwandiger Ausbildung eine hohe Stabilität hat. Bevorzugt bildet dabei der Korpusteil eine über ihre Radialerstreckung im wesentlichen einteilige Außenhülse und der Träger eine entsprechend einteilige und ggf. dünnwandigere Innenhülse, so daß bei geringem Materialaufwand und einfacher Ausbildung eine hohe Festigkeit erzielt wird.

Auch die Wandungsflächen bzw. der Korpusteil können aus nahezu beliebigen metallischen oder nicht metallischen Materialien bestehen und werden bevorzugt aus einem Naturwerkstoff bzw. aus einem solchen Werkstoff hergestellt, der durch Bearbeitung verhältnismäßig einfach mit einer rauhen Oberfläche versehen werden kann. Z.B. kann die Öffnung als Sacklochbohrung mit im wesentlichen durchgehend ebener Bodenfläche durch Bohren hergestellt werden, so daß sie einerseits rauhe bzw. faserige Bohrungsflächen hat und andererseits einen Gießnapf zur Aufnahme des plastischen Werkstoffes für die Herstellung des Trägers bildet. Bestehen die Wandungsflächen der Öffnung bzw. der Korpusteil dabei aus einem thermisch gut isolierenden Werkstoff, wie Holz, so braucht der Korpusteil für die Herstellung des Trägers nicht erwärmt zu werden. Nach dem Einbringen des plastifizierten Werkstoffes durch das oben liegende, offene Ende der Öffnung wird in die Öffnung ein gegenüber dieser in den Querschnitten reduzierter Formkern eingeführt, dessen Außenform der beabsichtigten Innenform des Trägers entspricht.

Sobald dieser Formkern nach Art eines kolbenartigen Stempels mit seiner Stirnfläche die plastifizierte Masse errreicht hat, wird diese zwischen dem Außenumfang des Formkernes und den Wandungsflächen in Richtung zum offenen Ende der Öffnung gepreßt, wobei der Formkern außer axial auch drehend bewegt werden kann. Der Formkern kann vor dem Einfahren etwa auf die Schmelztemperatur des Trägerwerkstoffes erwärmt werden bzw. mit einer innen liegenden Beheizung versehen sein. Der plastifizierte Trägerwerkstoff kann derart in die schwammartig wirkenden Wandungsflächen sowohl des Mantels als auch der Bodenfläche der Öffnung durch Kapillarwirkung eindringen, daß zwischen dem Träger und dem Korpusteil eine Verbund-Grenzschicht gebildet ist, welche aus dem mit dem Trägerwerkstoff getränkten Werkstoff des Korpusteiles besteht. Dadurch ergibt sich eine ganzflächige bzw. lückenlose Verzahnung der entsprechenden Flächen des Korpusteiles und des Trägers. Nach dem Erstarren des Trägerwerkstoffes kann der Formkern aus dem geformten Träger herausgefahren werden. Meist wird dabei der Trägerwerkstoff über die von der Öffnung durchsetzte Fläche des Korpusteiles vorstehen; um hier eine saubere Fläche zu erhalten, werden abschließend die Außenfläche des Korpus-teiles und das zugehörige Ende des Trägers gemeinsam durch Sägen, Schleifen oder dgl. bearbeitet, so daß sich ein völlig bündiger Abschluß ergibt. Das erfindungsgemäße Verfahren ermöglicht eine sehr einfache und sichere Anbringung des Verstellers.

Soll das Stellglied nicht über ein Zwischenglied, sondern durch unmittelbaren Eingriff an dem Träger gelagert werden, so hat der Formkern praktisch die gleiche Außenform wie das Stellglied. Bei einer sehr einfachen Ausbildung weist der Träger am Innenumfang seines Hülsenmantels ein unmittelbar bis zu seiner Bodenwand reichendes Innengewinde auf, in das ein einteiliger Schaft des Stellgliedes mit einem entsprechenden Außengewinde eingreift. In diesem Fall wird zum Entfernen des Formkernes nach dem Erstarren des Trägers der mit dem Außengewinde versehene Formkern durch Drehen herausgeschraubt.

Infolge der relativ hohen Verbundstabilität braucht der Durchmesser des Stellglied-Schaftes nur geringfügig kleiner als die kleinste Außenweite des Korpusteiles zu sein. Dadurch kann das Stellglied annähernd über seine gesamte Länge konstante Außenquerschnitte aufweisen und mit seiner äußeren Endfläche eine im wesentlichen ebene Spann- bzw. Standfläche bilden, die gegenüber der vom Außenumfang des Korpus-teiles bzw. des Stellgliedes begrenzten Querschnittsfläche nur wenig kleiner ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:

Fig. 1    einen erfindungsgemäßen Möbel-Versteller im Axialschnitt,

Fig. 2    einen Ausschnitt des Gewindes des Verstellers gemäß Fig. 1 in vergrößerter Darstellung und

Fig. 3    eine weitere Ausführungsform eines Gewindes gemäß Fig. 2.

Der Versteller 1 ist an einem als Tischbein ausgebildeten Korpusteil 2 angeordnet, der im wesentlichen durch ein Stabprofil aus Holz mit rechteckigen bzw. quadratischen Querschnitten ausgebildet ist und zumindest über die Länge des Verstellers 1 bzw. darüberhinaus im wesentlichen konstante Querschnitte seines Außenumfanges 4 hat. Der Versteller 1 steht über die untere Endfläche 5 des Korpusteiles 2 vor, kann jedoch nahezu vollständig in diesen versenkt werden. Zur Aufnahme des Verstellers 1 weist der Korpusteil 2 eine etwa in seiner Mittelachse 3 liegende und seine Endfläche 5 durchsetzende Öffnung 6 auf, die über ihre Länge im wesentlichen konstante Querschnitte hat. Dadurch bildet der Korpusteil 2 mit seinem an die Endfläche 5 anschließenden Abschnitt einen einteiligen Mantel 7, der am Innenumfang von Wandungsflächen 8, 9 der Öffnung 6, nämlich vom zylindrischen, stufenfreien Bohrungsmantel und vom rechtwinklig zur Mittelachse 3 liegenden, vollständig geschlossenen Bohrungsboden begrenzt ist.

In diesen Mantel 7 ist vollständig versenkt ein am inneren Ende geschlossener, hülsenförmiger Träger 10 eingesetzt, an dem ein Stellglied 11 etwa parallel zur Mittelachse 3 stufenlos so geführt ist, daß es im wesentlichen vollständig innerhalb des Korpusteiles 2 liegen oder mehr oder weniger über die Endfläche 5 vorstehen kann. Aufgrund der beschriebenen Herstellung des Trägers 10 braucht die Mittelachse der Öffnung 6 nicht besonders genau fluchtend mit dem Korpusteil 2 hergestellt zu werden, weil nämlich durch exakte Führung des Formkernes gegenüber dem Außenumfang 4 des Korpusteiles 2 eine sehr genaue Ausrichtung derjenigen Eingriffsflächen des Trägers 10 möglich ist, welche die Ausrichtung des Stellgliedes 11 bestimmen.

Der einteilige Träger 10 bildet einen über die Länge der Wandungsflächen 8 ununterbrochen durchgehenden Mantel 12 und einen einteilig an diesen anschließenden, vollständig geschlossenen Boden 13 am einen Mantelende. Die Dicke des Mantels 12 und des Bodens 13 können etwa gleich sein und sind zweckmäßig kleiner als die kleinste Dicke des Mantels 7. Die mittlere Länge des Trägers 10 entspricht etwa dem 3-fachen des Durchmessers seines zylindrischen Außenumfanges. Die von der Bodenwand 13 entfernte, offene Endfläche 14 des Trägers 10 schließt bündig und lückenlos mit der Endfläche 5 ab.

Am Innenumfang ist der Mantel 12 des Trägers 10 mit einer profilierten, bis zur ebenen Innenseite der Bodenwand 13 und bis zur Endfläche 14 reichenden Eingriffsfläche 15 für das Stellglied 11 versehen, die zweckmäßig durch ein als Rundgewinde ausgebildetes Innengewinde 16 gebildet ist. Dadurch weist der Träger 10 von der Innenseite der Bodenwand 13 bis zu seiner Endfläche 14 im wesentlichen konstante Innenquerschnitte und von der Außenfläche der Bodenwand 13 bis zur Endfläche 14 im wesentlichen konstante Außenquerschnitte auf.

Das Stellglied 11 ist durch einen einteiligen, zweckmäßig massiven Rotationskörper nach Art eines Zylinderzapfens gebildet, der mit einem an seinem Außenumfang vorgesehenen Außengewinde 17 im wesentlichen spielfrei bzw. mit geringer radialer und/oder axialer Vorspannung in die Gewindegänge des Innengewindes 16 eingreifen kann, so daß er durch Reibung bzw. Selbsthemmung gegen versehentliches Verdrehen gesichert ist. Das Außengewinde 17 reicht annähernd von der inneren, ebenen Endfläche 18 des Stellgliedes 11 bis zu dessen äußerer, ebener Endfläche 19, die die Standfläche des Korpusteiles 2 bildet. Anschließend an diese äußere Endfläche 19 weist das Stellglied 11 einen gewindefreien, gegenüber dem Außengewinde 17 geringfügig reduzierten, zylindrischen Endabschnitt 20 auf. Der Außendurchmesser des Endabschnittes 20 kann etwa dem Kerndurchmesser des Außengewindes 17 entsprechen, während seine Axialerstreckung mehrfach kleiner als sein Außendurchmesser ist. An diesem Endabschnitt 20 sind über den Umfang im wesentlichen gleichmäßig verteilte Eingriffsglieder 21 für ein Werkzeug zum Drehen des Stellgliedes 11 vorgesehen. Diese Eingriffsglieder 21 können z.B. durch radiale Sacklochbohrungen für die Steckaufnahme eines Werkzeugbolzens gebildet sein.

Die Endflächen 5, 14 sind gegenüber der Mittelachse 3 unter etwa 45° geneigt, so daß das Stellglied 11 von dem Träger 10 über den Außenumfang auf unterschiedlicher Länge aufgenommen ist. Der am weitesten vorspringende Bereich der Endfläche 5 ist im Querschnitt konvex abgerundet, so daß er ebenfalls als annähernd linienförmige Standfläche dienen kann, sofern das Stellglied 11 vollständig versenkt oder durch Lösen aus dem Träger 10 herausgenommen ist. Durch Verwendung eines Rundgewindes werden Verschmutzungen der Eingriffsflächen weitestgehend vermieden bzw. können abgelagerte Schmutzpartikel leicht wieder entfernt werden; dies wird auch durch die schrägen Endflächen 5, 14 begünstigt. Durch das abgeschrägte Ende bildet der Korpusteil 2 auch eine Art Blende und einen optisch günstigen Übergang für das Stellglied 11.

Das Innengewinde 16 und das Außengewinde 17 weisen zweckmäßig im wesentlichen identische Querschnitte auf. Anhand des Innengewindes 16 ist gemäß Fig. 2 erkennbar, daß die teilkreisförmigen Kopf- und Bodenflächen über kurze, geradlinige Flanken 22 ineinander übergehen, deren Länge kleiner als bzw. nur etwa halb so groß wie der Radius der gekrümmten Abschnitte ist. Die Gewindehöhe ist dadurch etwa doppelt so groß wie dieser Radius, nämlich größer als 1 bzw. 2 mm. Der Flankenwinkel 23 der Flanken 22 beträgt hier etwa 30°.

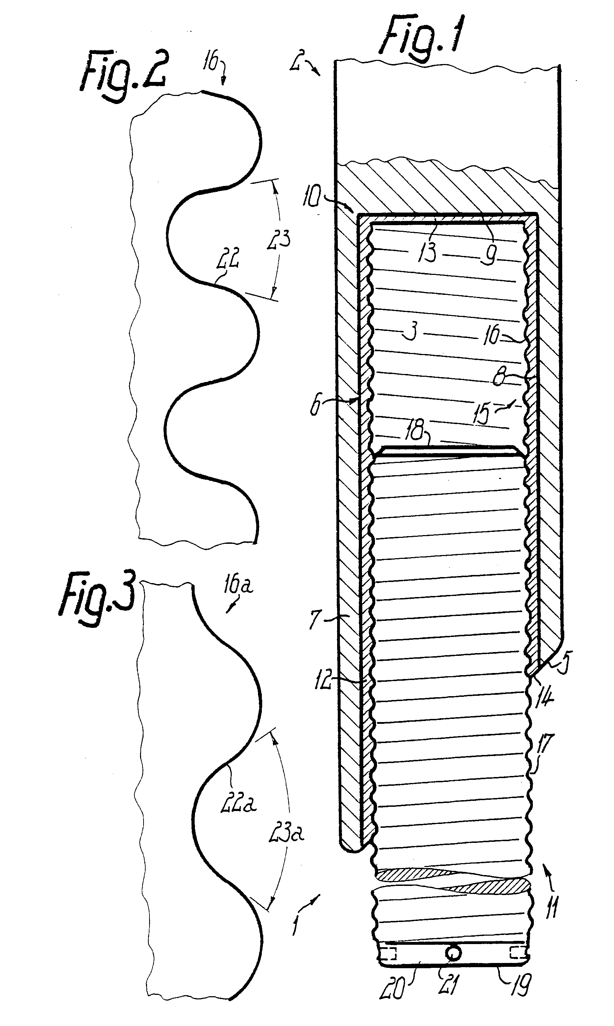

Demgegenüber kann bei der Ausbildung nach Fig. 3 die Gewindehöhe kleiner, nämlich etwa 1,5 mm, gewählt werden, wobei der Flankenwinkel 23a etwa 70° beträgt. Bei dieser Ausbildung gehen die gekrümmten Abschnitte tangential unmittelbar ineinander über, so daß S-förmig gekrümmte Flanken 22a gebildet sind. Die Gewindesteigung liegt zweckmäßig bei etwa 4 bis 5 mm, wobei die Boden- und Kopfflächen gleiche Krümmungsradien in der Größenordnung von 1 mm haben. Das aus Kunststoff bzw. Polyurethan bestehende Innengewinde 16 läßt sich in der beschriebenen Weise sehr glattflächig, nämlich mit annähernd porenfrei geschlossener Oberfläche ausbilden. Eine entsprechende Glattflächigkeit ist an dem aus Leichtmetall bestehenden Außengewinde 17 durch Polieren zu erreichen. Die ineinander greifenden Gewinde können dadurch insofern selbstschmierend wirken, als sie ohne die Verwendung gesonderter Schmiermittel stets dieselbe Leicht- bzw. Schwergängigkeit haben. Der Endabschnitt 20 ist auch als Steckglied für die Aufnahme eines z.B. napfförmigen Fußteiles geeignet, das dann die Standfläche bildet. Die verwendeten Rundgewinde sind auch gegen Verletzungen durch Schlagbelastung verhältnismäßig unempfindlich. Da der Träger 10 unmittelbar durch Verpressen in der Öffnung 6 hergestellt ist, ergibt sich eine verhältnismäßig große Werkstoffdichte und eine relativ geringe Druckelastizität.

Der Stellweg kann in der Größenordnung von mindestens 50 mm liegen, so daß benachbarte Tischplatten gut auf gleiche Höhe eingestellt werden können. Der Gewindedurchmesser liegt mit 40 mm etwa in der Größenordnung des Stellweges, gegenüber dem die Gewindelänge mehrfach größer ist.

**Patentansprüche**

1. Möbel-Versteller, insbesondere zum Höhenausgleich einer Standfläche, dadurch gekennzeichnet, daß er einen an einem Korpusteil (2) des Möbels angeordneten Träger (10) zur verstellbaren Aufnahme eines Stellgliedes (11) an Eingriffsflächen (15) aufweist, der vorzugsweise als gegen Wandungsflächen (8, 9) einer Öffnung (6) in dem Korpusteil (1) angegossener Trägerkörper ausgebildet ist.

2. Versteller nach Anspruch 1, dadurch gekennzeichnet, daß eine Außenfläche des Trägers (10) im wesentlichen ganzflächig durch Oberflächenrauhigkeit verzahnt mit den Wandungsflächen (8, 9) der Öffnung (6) formschlüssig und/oder haftend verbunden ist.

3. Versteller nach Anspruch 1 oder 2, dadurch gekennzeichnet, daß die Öffnung (6) im wesentlichen als Sacklochbohrung ausgebildet ist und daß vorzugsweise der Träger (10) ganzflächig mit der Bodenfläche (9) und/oder ganzflächig mit der Mantelfläche (8) der Öffnung (6) verbunden ist.

4. Versteller nach einem der vorhergehenden Ansprüche, dadurch gekennzeichnet, daß der im wesentlichen vollständig versenkt in der Öffnung (6) liegende Träger (10) annähernd bündig mit einer von der Öffnung (6) durchsetzten Außenfläche (14) des Korpusteiles (2) abschließt, insbesondere gemeinsam mit dieser Außenfläche eine einzige Bearbeitungsfläche, wie eine Schnittfläche, bildet.

5. Versteller nach einem der vorhergehenden Ansprüche, dadurch gekennzeichnet, daß der Träger (10) als insbesondere hülsenförmiger Hohlkörper ausgebildet ist und vorzugsweise eine gegenüber der zugehörigen Wandungsdicke des Korpusteiles (2) geringere Wandungsdicke hat.

6. Versteller nach einem der vorhergehenden Ansprüche, dadurch gekennzeichnet, daß der Träger (10) aus thermoplastischem Kunststoff, wie Polyurethan, bzw. die Wandungsflächen (8, 9) aus einem faserigen Werkstoff, wie Holz, bestehen und/oder daß der Träger (10) durchgehend einteilig ausgebildet ist bzw. unmittelbar die Eingriffsflächen (15) für die Lagerung des vorzugsweise einteiligen Stellgliedes (11) aufweist.

7. Versteller nach einem der vorhergehenden Ansprüche, dadurch gekennzeichnet, daß die Eingriffsflächen (15) durch ein Gewinde, insbesondere ein Innengewinde (16), gebildet sind, das vorzugsweise als Rundgewinde mit einem Flankenwinkel (23, 23a) zwischen etwa 30° und 70° ausgebildet und im wesentlichen über die gesamte Innenlänge am Innenumfang des Hülsenmantels des Trägers (10) vorgesehen ist.

8. Versteller nach einem der vorhergehenden Ansprüche, dadurch gekennzeichnet, daß das Stellglied (11) im wesentlichen über seine Länge durchgehend gleiche Querschnitte und/oder etwa gleiche Länge wie der Träger (10) aufweist und vorzugsweise an einem äußeren, an ein Außengewinde (17) anschließenden, kurzen Endabschnitt (20) Werkzeug-Eingriffsglieder (21), wie Umfangsöffnungen, aufweist.

9. Versteller nach einem der vorhergehenden Ansprüche, dadurch gekennzeichnet, daß das Stellglied (11) im wesentlichen über seine Länge durchgehend Vollquerschnitte aufweist und/oder aus Metall, insbesondere Leichtmetall, wie Aluminium, besteht.

10. Versteller nach einem der vorhergehenden Ansprüche, dadurch gekennzeichnet, daß der Korpusteil (2) wenigstens im Bereich des Trägers (10) im wesentlichen ein an einer Endfläche (5) von der Öffnung (6) durchsetztes Stabprofil ist, zu dem vorzugsweise der Träger (10) im wesentlichen achsgleich liegt und/oder dessen Endfläche (5) unter etwa 45° abgeschrägt ist.

Fig.1

Fig.2

Fig.3

**Europäisches Patentamt**

**EUROPÄISCHER RECHERCHENBERICHT**

Nummer der Anmeldung

**EP 91 11 7105**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 890 545 (FIDDLER) | 1 | A 47 B 91/02 |
| A | (* Spalte 1 - Spalte 3; Abbildung 2 *) | 3,5,8-9 | B 29 C 67/18 |
| | – – – | | B 29 D 1/00 |
| Y | DE-A-3 844 295 (FESTO KG) | 1 | |
| A | (* Spalte 1, Zeile 3 - Spalte 2, Zeile 1 *) | 2-3 | |
| | – – – – – | | |

|  |
|---|
| RECHERCHIERTE SACHGEBIETE (Int. Cl.5) |
| A 47 B<br>B 29 C<br>B 29 D |

**Der vorliegende Recherchenbericht wurde für alle Patentansprüche erstellt**

| Recherchenort | Abschlußdatum der Recherche | Prüfer |
|---|---|---|
| Den Haag | 07 Februar 92 | NOESEN R.F. |